# EUROPEAN PATENT SPECIFICATION

(11) **EP 1 374 953 B1**
(45) Date of publication and mention of the grant of the patent: **15.07.2009**
(21) Application number: 03076609.1
(22) Date of filing: 26.05.2003
(51) Int. Cl.: A62C 2/06

(54) **Bush comprising intumescent material for a conduit**
Intumeszierendes Material enthaltende Rohrbüchse
Passage de conduit à matériau intumescent

(30) Priority: 17.06.2002 NL 1020887
(43) Date of publication of application: 02.01.2004
(73) Proprietor: J. van Walraven Holding B.V., 3641 RK Mijdrecht (NL)
(72) Inventor: van Walraven, Jan, 3641 GP Mijdrecht (NL)
(74) Representative: Brookhuis, Hendrik Jan Arnold

(56) References cited:
- EP-A- 0 890 372
- EP-A- 1 070 895
- AT-B- 385 899
- DE-U- 29 815 912
- US-A- 5 984 126
- US-B1- 6 176 052

## Description

The present invention relates to a bush comprising intumescent material for a conduit, which bush, in the event of a fire, has the effect of closing off the passage for the conduit through a wall or floor.

Closing elements comprising intumescent material, which are adapted to close off the passage of a conduit through a wall or a floor are known from the prior art.

For example AT 385 899 discloses a sealing for closing of a passage in a wall through which a plastic conduit extends in case of a fire. The sealing is constituted by three ring shaped elements of intumescent material, positioned axially behind each other in the passage around the conduit. The middle element is made of an intumescent material which exapnds at higher temperature as the intumescent material of the outer two elements.

From EP 1 070 895 is known a bushing for a conduit in which a heat conductor is embedded in intumescent material. The heat conductor provides a quicker heating of the intumescent material and a quicker reaction of the fire bushing.

From US 6 176 052 is known a metal sleeve for pipes and cables through a floor through-hole. The sleeve is filled with mortar after it has been positioned in the floor. It has tongue pieces provided on its lower end. The underside of the tongue pieces is provided with heat expansion fire resistant material which in case of fire swells and blocks the entirety of the floor through-hole.

In particular the present invention relates to a bushing according to the preamble of claim 1.

A bush of this type is known from the prior art and is used primarily for thermally insulated conduits. Under the influence of the heat associated with a fire, the intumescent material expands, with the purpose of closing off the passage for the conduit through a wall or a floor.

One drawback of the bush as known from the prior art is that a bush of this type, in the event of a fire, does not always ensure early and reliable closure of the passage through the wall or floor for the conduit around which the bush is placed. This problem arises in particular in the case of plastic conduits.

It an object of the present invention to eliminate this drawback.

According to a first aspect of the invention, this object is achieved by a bush comprising intumescent material for a conduit, which bush, in the event of a fire, has the effect of closing off the passage for the conduit through a wall or floor and which bush has an annular body made from insulating material with an opening for the conduit and a first zone comprising intumescent material which extends over the outer circumference of the annular body made from insulating material, characterized in that there is a second zone comprising intumescent material which adjoins the opening for the conduit.

With a bush of this type, the intumescent material of the first zone substantially has the function of filling a space of limited size around the conduit, for example in the wall or floor which has been penetrated and/or filling the space which is formed as a result of (part of) the insulating annular body being lost in the event of a fire.

The intumescent material of the second zone lies very close to the conduit around which the bush is arranged. In the event of a fire, the intumescent material will be noticeably more effective in the region of the conduit than in the case of bushes which are known from the prior art. If necessary, the conduit is even quickly pressed closed and the cavity formed in the process is filled. In the case of metal conduits, it is conceivable for the heat transfer to this intumescent material to take place directly from the conduit, rather than having to be effected via the annular body made from insulating material.

The intumescent material is preferably arranged in the form of one or more intumescent elements in the second zone. If there are a plurality of intumescent elements, they are preferably located at a certain distance from one another in the circumferential direction.

In one possible embodiment, the elements made from intumescent material of the second zone are accommodated in grooves in the annular body made from insulating material. These grooves may extend in the longitudinal direction or in the circumferential direction of the opening for the conduit and/or may extend helically around the said opening.

If the grooves extend substantially in the longitudinal direction of the opening for the conduit and are open at one axial end of the conduit, it is possible for each element made from intumescent material of the second zone to be pushed into the associated groove, if appropriate after the annular body has been positioned around the conduit. If appropriate, intumescent material is not arranged in all the grooves.

The intumescent elements may be clamped inside the grooves. It is also possible for the elements made from intumescent material of the second zone to be fixed to the annular body, for example by riveting or adhesive bonding.

The fact that the intumescent material is accommodated in two different zones means that it is possible to select different intumescent properties for the intumescent material of the first zone from the intumescent properties of the intumescent material of the second zone.

A preferred embodiment of the bush according to the present invention has at one location or at a plurality of locations which are spaced apart from one another in the circumferential direction of the opening for the conduit, is provided with a dent-forming means which, in the event of a fire, presses a dent into the conduit, which dent or dents destroy the circular shape of the conduit and as a result make it easier for the conduit to be pressed closed further by the intumescent material.

In the event of a fire, therefore, the bush according to the second aspect of the invention ensures that the conduit first of all acquires an inwardly directed dent at one location or a plurality of spaced-apart locations around the circumference, so that the original circular shape of the conduit is lost. Then, the conduit is pressed completely closed by the intumescent material. The step of first of all making one or more dents in the conduit means that the operation of pressing the conduit completely closed becomes easier, since the dented conduit can offer much less resistance to the expanded intumescent material than if the conduit were still circular in cross section. In the case of the bush which is known from WO 91/19540, the expanding intumescent material will exert a virtually uniform pressure on the circumference of the conduit, with the result that the conduit retains its circular cross section and consequently is able to resist the pressure from the intumescent material for too long.

In one possible embodiment, it is provided that the bush is provided, at one location or at a plurality of locations which are spaced apart from one another around the opening for the conduit, with a dent-forming element made from intumescent material which presses a dent into the conduit.

The bush is preferably also provided with one or more elements which are of different design, are made from intumescent material and press the conduit closed further after the dent or dents have been formed in the conduit. These further elements made from intumescent material may be arranged between the one or more dent-forming elements, as seen in the circumferential direction of the opening for the conduit. As an alternative or in combination with this measure, it would also be possible, by way of example, to provide an annular intumescent material which is positioned around the outside of the one or more dent-forming elements or is axially offset with respect to the one or more dent-forming elements.

In another possible embodiment, it is provided that the bush is designed in such a manner that, as a result of expansion of the intumescent material of each dent-forming means, the conduit, at one location or at a plurality of locations which are spaced apart from one another in the circumferential direction of the conduit, for example at diametrically opposite locations, is subjected to load more quickly and/or with a significantly greater inwardly directed pressure than the remaining part of the circumference of the conduit, in such a manner that at the said location or locations a dent is pressed into the conduit, facilitating the subsequent operation of pressing the conduit closed by means of the intumescent material.

In one possible embodiment, it is provided that the bush is provided, around the circumference of the opening for the conduit, with one or more uniform elements made from intumescent material, a pressure-concentrating member being provided at one location or at a plurality of locations which are spaced apart from one another around the circumference of the opening for the conduit, between the intumescent material and the circumference of the opening for the conduit, having a relatively large surface area on which the intumescent material can exert an inwardly directed compressive force and a relatively small surface area on the side which faces towards the opening of the conduit. The pressure-concentrating member then has the effect that the pressure of the intumescent material pressing on it at these locations acts on a smaller surface area of the conduit than in the remaining part of the circumference of the conduit, so that the conduit first of all acquires a dent at the said location or locations.

In another embodiment, it is provided that the bush is provided, at one location or at a plurality of locations which are spaced apart from one another in the circumferential direction of the bush around the opening for the conduit, with a relatively quick-acting element made from intumescent material, which presses a dent into the conduit, and is provided, along the remaining part of the circumference, with one or more relatively slow-acting elements made from intumescent material. In this context, it should be noted that the relatively quick-acting and slow-acting elements could be made from the same grade of intumescent material, in which case the relatively quick-acting elements have a greater thickness in the primary direction of expansion than the relatively slow-acting elements, so that the former undergo greater absolute expansion in the event of a fire. On the other hand, it is, of course, also possible to use different grades and forms of intumescent material.

The bush according to the invention is suitable for all types and sizes of conduits, in particular for multilayer plastic conduits with an integrated metal layer, but also for conduits made completely from (reinforced) plastic, metal (for example copper) conduits, thermally insulated conduits, plastic conduits which are externally coated with a layer of metal (for example as a vapour barrier), etc.

The conduit according to the invention can be designed for any assembly conditions.

The bush preferably has a stable outer casing, for example made from metal, which forms the outer circumference of the bush. The outer casing may comprise one or more parts in order to enable it to be fitted around the conduit.

The bush may be designed to be arranged around the conduit in the vicinity of an opening in a wall or floor of a building, but may also be designed to be arranged partly or completely in an annular space between the conduit and the opening in the wall or floor.

The bush may be provided with securing means for fixing the bush to the floor or wall. Obviously, it is possible to provide an assembly of a plurality of bushes, for example having a common outer casing, which assembly can be used if a plurality of conduits are to pass through a single opening in a wall or floor.

It will be clear that the inventive idea can be realized in a very wide range of ways.

The aspects of the bush according to the invention will be explained in more detail below with reference to the drawing, which shows non-limiting exemplary embodiments. In the drawing:
Fig. 1 diagrammatically depicts a cross section through a first exemplary embodiment of the bush according to the invention which is arranged around a conduit,
Figs. 1a-c diagrammatically depict cross sections through a second exemplary embodiment of the bush according to the invention in various positions,
Fig. 2 diagrammatically depicts a cross section through a third exemplary embodiment of the bush according to the invention,
Fig. 3 diagrammatically depicts a cross section through a fourth exemplary embodiment of the bush according to the invention,
Fig. 4 diagrammatically depicts a cross section through a fifth exemplary embodiment of the bush according to the invention,
Fig. 5 diagrammatically depicts a cross section through a sixth exemplary embodiment of the bush according to the invention,
Fig. 6 diagrammatically depicts a perspective view of a seventh exemplary embodiment of the bush according to the invention, and
Fig. 7 diagrammatically depicts a cross section through an eighth exemplary embodiment of the bush which does not form part of the invention.

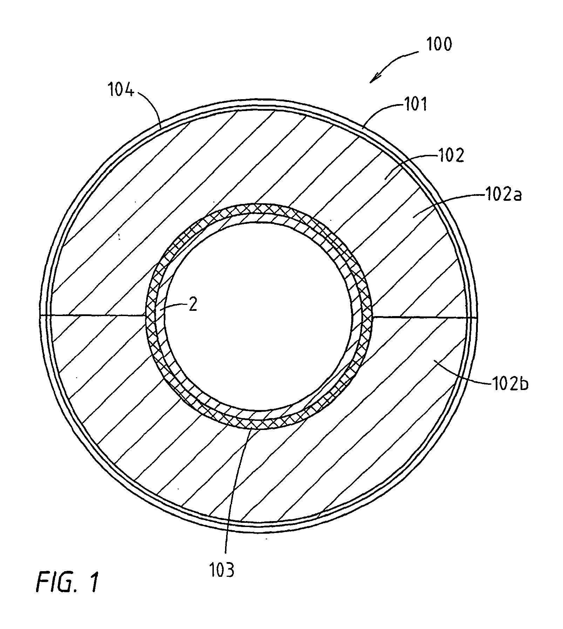

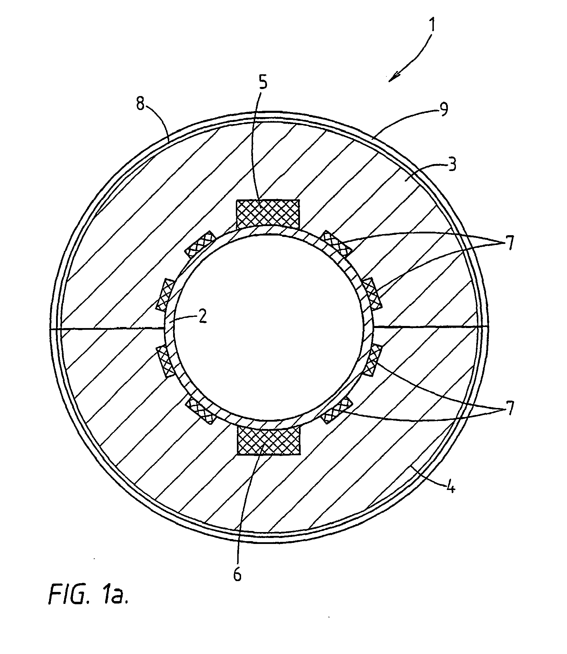

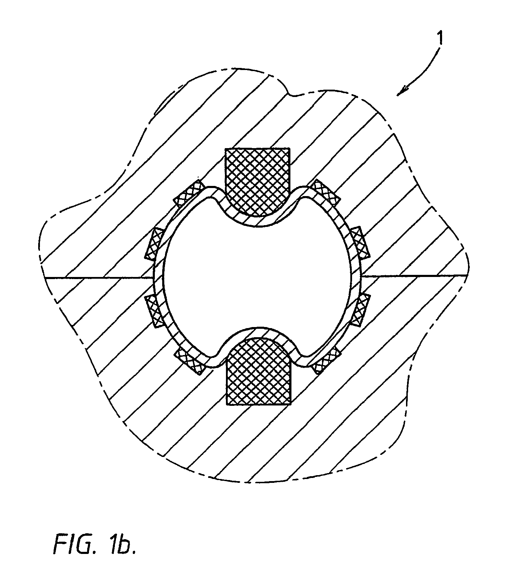

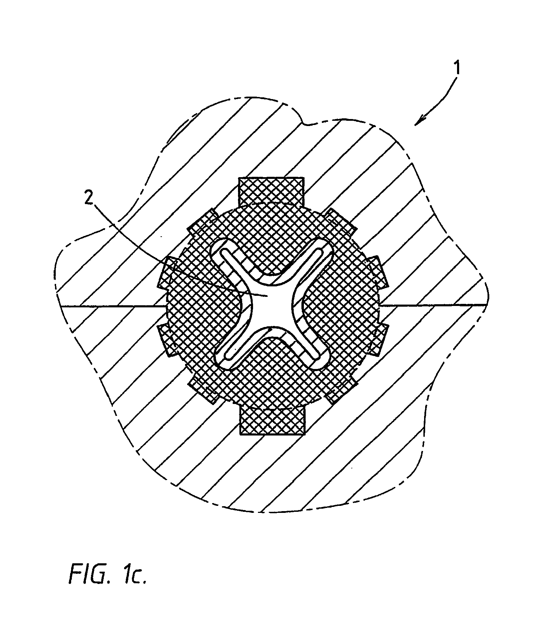

Figure 1 shows a bush 100 according to the invention. The bush has a stable outer casing 101 which is assembled from two halves made, for example, from (sheet) metal. Furthermore, the bush has an annular body 102 made from thermally insulating material, assembled from two halves 102a and 102b.

Around the opening for the conduit 2 there is, in a second zone, a layer 103 of intumescent material. Furthermore, in a first zone there is a layer 104 made from intumescent material between the annular body 102 and the outer casing 101.

Figures 1a-c show a bush 1 according to the invention which is arranged around a conduit 2.

The bush 1 in this example has an annular body which is assembled from two halves 3, 4 and is surrounded by a stable outer casing 9, preferably made from metal. The outer casing may be formed from one or more parts, in such a manner that the outer casing 9 can be opened in order for the bush 1 to be positioned around the conduit 2.

At two locations, which lie diametrically opposite one another in the circumferential direction of the opening for the conduit 2, the bush 1 has a dent-forming element 5,6 made from intumescent material.

Along the remaining part of the circumference of the opening for the conduit 2, the bush 1 is provided with a plurality of elements 7 made from intumescent material which differ from the dent-forming elements 5, 6.

In particular, in this example, it is provided that the dent-forming elements 5, 6 are made from a relatively quick-acting intumescent material, and the other elements 7 are made from a relatively slow-acting intumescent material.

In this example, the dent-forming elements 5, 6 have a greater thickness than the other elements 7.

If appropriate, it is not necessary for the elements 7 to be identical to one another.

The ring halves 3, 4 are preferably designed with a body made from thermally insulating material, for example a material containing phenol, PU or PIR, for example in a hard foam quality, or mineral wool or foamed glass, in which slots, in this example longitudinal slots, are arranged along the opening for the conduit 2 in order to receive the intumescent elements 5, 6, 7.

Around the outer circumference of the halves 3, 4 there is an outer layer 8 of intumescent material, for example with a small thickness. It is also possible to completely cover the halves 3, 4 with a layer of intumescent material, i.e. including at the end faces.

Figure 1a shows the conduit 2 and bush 1 in the normally assembled state, for example at the location of an opening in a wall or floor of a building through which the conduit 2 is guided. The bush 1 has a stable outer casing 9.

If fire breaks out, the bush 1 will come into action as a result of heating. Figures 1b and 1c will illustrate how the bush 1 functions.

As a result of the temperature rise, the dent-forming intumescent elements 5, 6 are activated, for example at a temperature of 120°C, and begin to expand rapidly. The other elements 7 are of a design which is such that they are only activated later, for example at a higher temperature, and/or expand more slowly. This results in the effect shown in Figure 1b, whereby the conduit 2, at the location of the dent-forming elements 5, 6, acquires an inwardly directed dent and loses its original circular shape. As a result of the dents, the strength of the conduit 2 is now greatly reduced, with the result that the expansion of the other elements 7, in combination with the ongoing expansion of the elements 5, 6 leads to the conduit 2 being pressed closed, which state has virtually been reached in Figure 1c.

For the sake of clarity, Figures 1b, 1c disregard the action of the outer layer 8 of intumescent material and the behaviour of the bodies of the halves 3, 4 in the event of a fire.

It will be clear that the loss of strength of the conduit 2 also occurs if the conduit 2 acquires a dent at only one location on its circumference, but obviously it is also conceivable - in particular in the case of relatively large-diameter conduits - for a dent to be pressed into the conduit at more than two locations by means of associated dent-forming elements.

It should be noted that the way in which the conduit 2 is pressed closed, even when diametrically opposite dent-forming elements are used, does not have to take place as suggested in the step from Figure 1b to Figure 1c. In particular, the way in which it is actually pressed closed can be influenced by the design of the conduit, the heating of the conduit around the circumference, the presence of a liquid (water) in the conduit, etc.

It is conceivable that the part of the conduit 2 which is located in the bush 1 will melt as a result of the fire and as a result will be lost altogether. The further expansion of the intumescent material will then ensure that no clear passage along which heat and smoke could still pass remains.

In a variant of the bush 1, the dent-forming elements 5, 6 are made from the same grade of intumescent material as the one or more other elements 7, and the dent-forming action of the elements 5, 6 is based in particular on the greater thickness of these elements 5, 6 compared to the elements 7.

It is also conceivable for a rigid element, for example a metal element, to be arranged between the dent-forming elements 5, 6 and the halves 3, 4, preventing the material of the half from being compressed under the influence of the expansion of the intumescent material, with the result that the expansion is effectively directed towards the conduit.

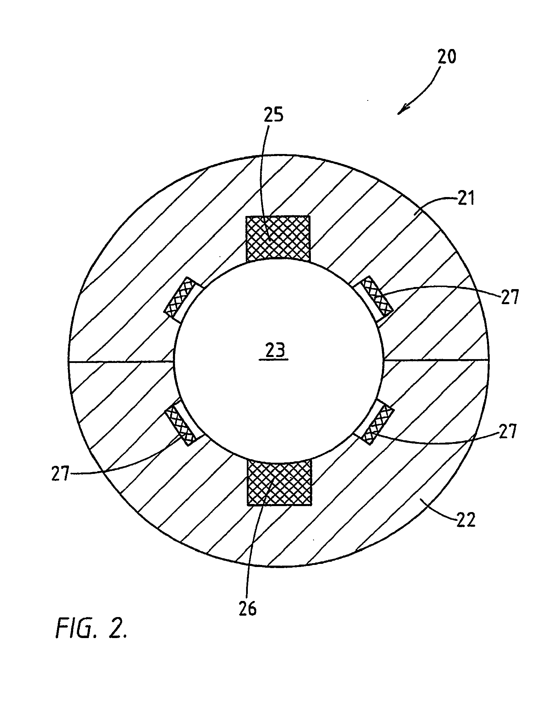

Figure 2 shows a bush 20 according to the invention having an annular body which is assembled from two halves 21, 22, with the outer casing and the outer layer of intumescent material omitted.

The bush 20 has a dent-forming element 25, 26 made from intumescent material at two locations which are positioned diametrically opposite one another in the circumferential direction of the opening 23 for the conduit (not shown).

Along the remaining part of the circumference of the opening 23 for the conduit, the bush 20 is provided with a plurality of elements 27 made from intumescent material which differ from the dent-forming elements 25, 26.

In particular, in this example it is provided that the dent-forming elements 25, 26 adjoin the circumference of the opening 23 for the conduit and therefore bear against the conduit in the assembled state. The other elements 27 lie further outwards and are therefore at a distance from the conduit in the assembled state. It can be seen from Figure 2 that there is an air gap between the conduit and each of the other elements 27, but in a variant there is a layer of suitable material between the circumference of the opening 23 and each of the other elements 27. By way of example, the said material is a thermally insulating material.

The intumescent elements 25, 26 and 27 are designed and accommodated in the halves 21, 22 in such a manner that, in the event of a fire, the elements 25, 26 first of all press a dent into the associated conduit, so that the circular shape of the latter is lost. Then, all the intumescent elements together press the conduit completely closed.

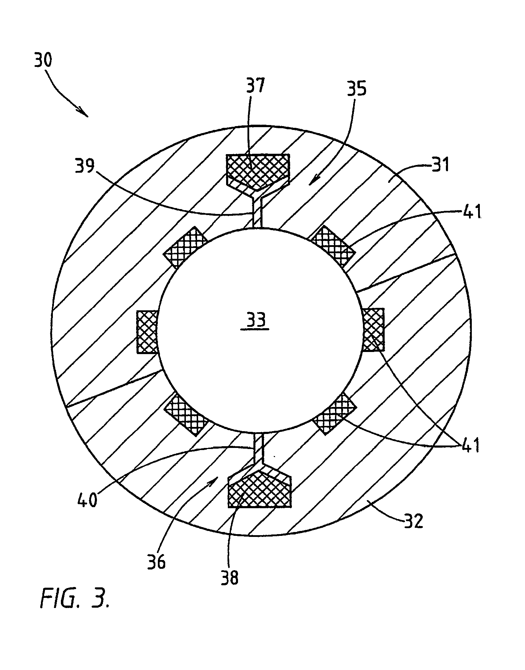

Figure 3 shows a bush 30 according to the invention with two halves 31, 32.

The bush 30 has a dent-forming means 35, 36 at two locations which are positioned diametrically opposite one another in the circumferential direction of the opening 33 for the conduit (not shown).

Each dent-forming means 35, 36 in this case comprises an element 37, 38 made from intumescent material, a pressure-concentrating member 39, 40 being provided between the corresponding element made from intumescent material 37, 38 and the circumference of the opening 33 for the conduit, this element having a large surface area on which the intumescent material 37, 38 can exert an inwardly directed compressive force and a small surface area on the side which faces towards the opening 33 for the conduit. By way of example, the members 39, 40 are made from metal.

The members 39, 40 cause the pressure which results from the expansion of the adjoining intumescent material 37, 38 to be exerted on a narrow strip in the length of the conduit, with the result that the conduit acquires an elongate dent at this location.

Along the remaining part of the circumference of the opening 33 for the conduit, the bush 30 is provided with a plurality of elements 41 made from intumescent material. It is conceivable for these elements 41 to be identical to the elements 37, 38, but obviously it is also possible for the elements 41 to be of a different quality and/or shape.

After the conduit has been indented by the action of the means 35, 36, the expansion of all the intumescent elements will cause the conduit to be pressed completely closed.

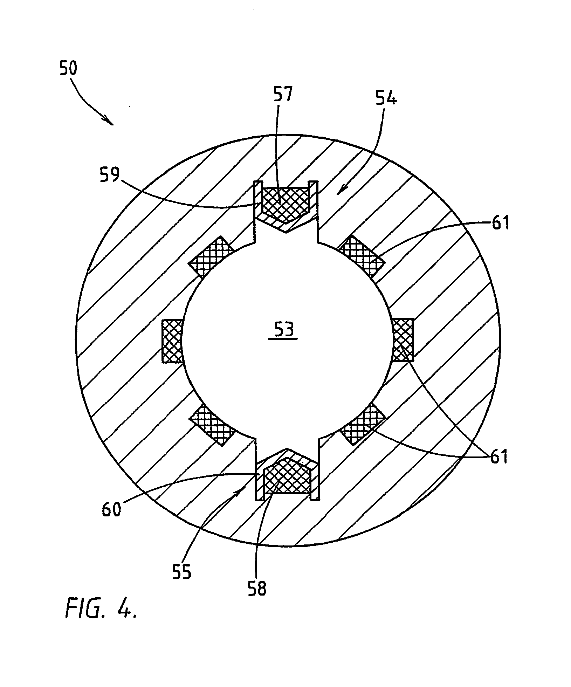

Figure 4 shows a bush 50 according to the invention.

The bush 50 has a dent-forming means 54, 55 at two locations positioned diametrically opposite one another in the circumferential direction of the opening 53 for the conduit (not shown) .

In this case, each dent-forming means 54, 55 comprises an element 57, 58 made from intumescent material which is accommodated in a cavity in a pressure-concentrating member 59, 60 which is provided between the corresponding element made from intumescent material 57, 58 and the circumference of the opening 53 for the conduit. The cavity of each pressure-concentrating member 59, 60 is open on the side which is remote from the opening 53 for the conduit.

The pressure-concentrating member 59, 60 has a relatively large surface area on which the intumescent material 57, 58 can exert an inwardly directed compressive force and a relatively small surface area on the side which faces the opening 53 for the conduit. By way of example, the members 59, 60 are made from metal.

In the event of a fire, the elements 57, 58 expand, with the result that the associated members 59, 60 are pressed strongly inwards onto the conduit, and at this location a dent is formed in the conduit.

It will be clear that the cross-sectional shape of the members 59, 60 may differ from the V shape shown here by way of example.

Along the remaining path of the circumference of the opening 53 for the conduit, the bush 50 is provided with a plurality of elements 61 made from intumescent material. It is conceivable for these elements 61 to be identical to the elements 57, 58, but obviously it is also possible for these elements 61 to have a different quality and/or shape. As an alternative to separate elements 61, it would also be possible to provide a layer of intumescent material.

After the conduit has been dented by the action of the dent-forming means 54, 55, the expansion of all the intumescent elements will cause the conduit to be pressed completely closed.

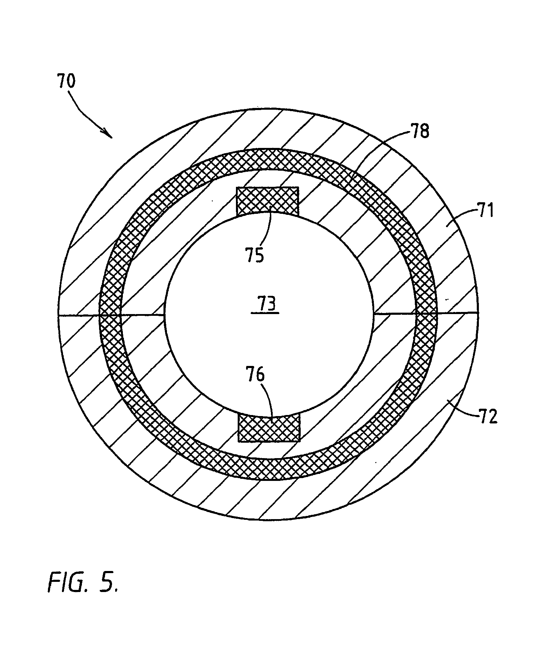

Figure 5 shows a bush 70 according to the invention with two bush halves 71, 72.

The bush 70 has a dent-forming element 75, 76 made from intumescent material at two locations which are positioned diametrically opposite one another in the circumferential direction of the opening 73 for the conduit (not shown). Around the outside of the dent-forming elements 75, 76 there is an annular element 78 made from intumescent material.

The dent-forming intumescent elements 75, 76 and the intumescent annular body 78 are designed and accommodated in the bush halves 71, 72 in such a manner that, in the event of a fire, the elements 75, 76 first of all press a dent into the associated conduit, so that the latter loses its circular shape. Then, all the intumescent elements together press the conduit completely closed.

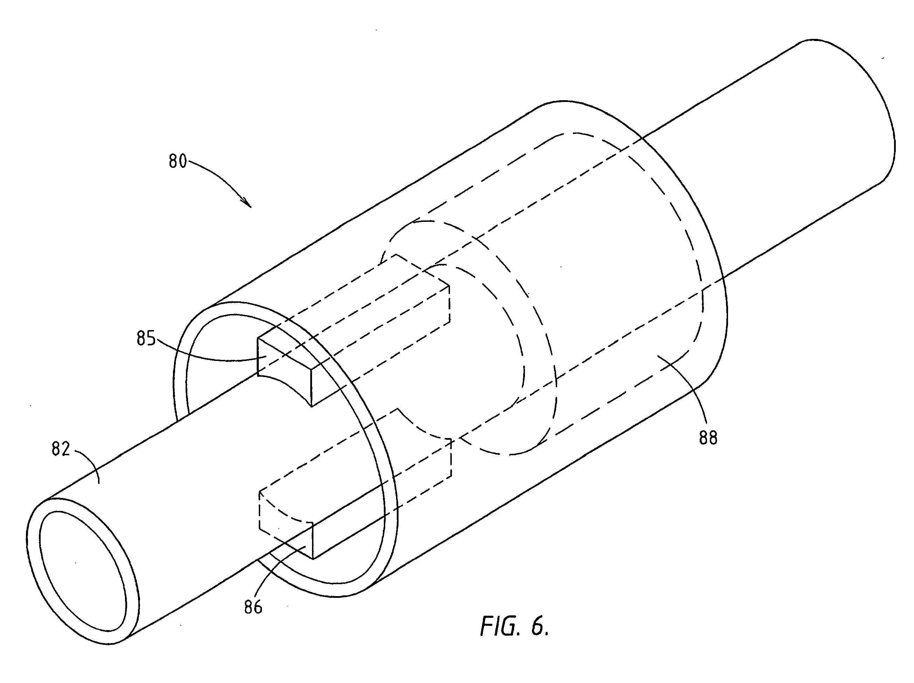

Figure 6 shows a bush 80 according to the invention.

The bush 80 has a dent-forming element 85, 86 made from intumescent material at two locations which are positioned diametrically opposite one another in the circumferential direction of the opening for the conduit 82. An annular element 88 made from intumescent material is provided axially offset with respect to the dent-forming elements 85, 86.

The dent-forming intumescent elements 85, 86 and the intumescent annular body 88 are designed and accommodated in the bush 80 in such a manner that, in the event of a fire, the elements 85, 86 press a dent into the associated conduit, so that the latter loses its circular shape, and then all the intumescent elements together press the conduits completely closed.

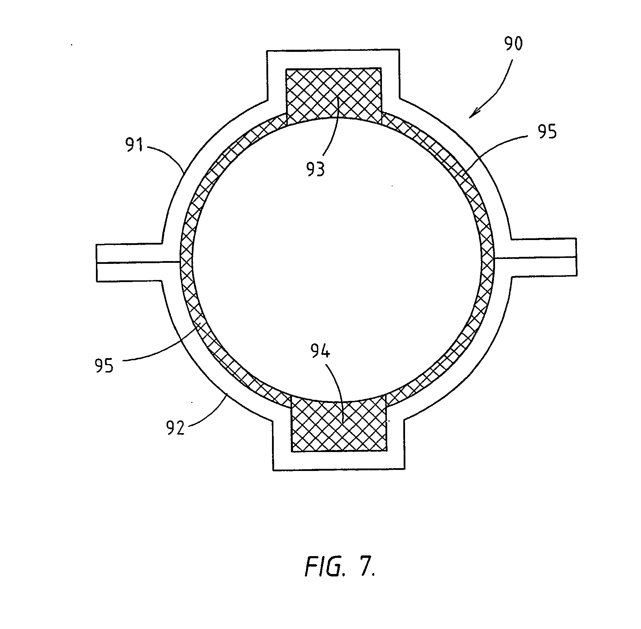

Figure 7 shows a bush 90 according to the invention.

The bush has a stable metal outer casing, which in this example is assembled from two outer casing halves 91, 92.

The outer casing halves 91, 92 each form a recess in which a dent-forming element 93, 94 made from quick-acting intumescent material is accommodated. In this example, the dent-forming elements 93, 94 are located diametrally with respect to the opening for the conduit.

Furthermore, the bush 90 is provided with two parts 95 made from relatively slow-acting intumescent material which lie along the inner circumference of the outer casing halves 91, 92.

It will be clear that the outer casing may also be of a design which is completely different from that shown in Figure 7.

The outer casing may be designed to mount the bush against the wall or ceiling in which the passage for the conduit is located, as is known per se from the prior art.

## Claims

1. Bush (1; 100; 20; 30; 50; 70; 80) comprising intumescent material for a conduit (2; 82), which bush (1), in the event of a fire, has the effect of closing off the passage for the conduit (2; 82) through a wall or floor and which bush has an annular body (102) made from insulating material with an opening (23; 33; 53; 73) for the conduit (2; 82) and a first zone comprising intumescent material which extends over the outer circumference of the annular body (102) made from insulating material, **characterized in that** there is a second zone comprising intumescent material which adjoins the opening (23; 33; 53; 73) in the annular body (102) for the conduit (2; 82).

2. Bush according to claim 1, in which one or more elements (5, 7; 25, 27; 41; 61; 75, 76; 85, 86) made from intumescent material are arranged over the inner circumference of the annular body made from insulating material, if appropriate at a distance from one another as seen in the circumferential direction.

3. Bush according to one of the preceding claims, in which one or more elements (5, 7; 25, 27; 41; 61; 75, 76; 85, 86) made from intumescent material are accommodated in grooves in the annular body made from insulating material which adjoin the opening for the conduit (2; 102) and run, for example, in the longitudinal direction, in the circumferential direction or helically.

4. Bush according to one of the preceding claims, in which the elements (5, 7; 25, 27; 41; 61; 75, 76; 85, 86) made from intumescent material in the second zone are fixed to the annular body made from insulating material, for example by being clamped in grooves which may be present, by adhesive bonding or by riveting.

5. Bush according to claim 3, in which one or more grooves are open on at least one end side of the bush, so that an element made from intumescent material can be pushed into the associated groove, for example after the annular body has been positioned around the conduit.

6. Bush according to one of the preceding claims, in which the intumescent material of the first zone has different intumescent properties from the intumescent material of the second zone.

7. Bush according to one of the preceding claims, in which a stable outer casing (10', 9) is arranged around the layer of intumescent material of the first zone.

8. Bush according to claim 1, in which an element made from non-intumescent material, preferably thermally insulating material, is arranged in the second zone between adjacent elements made from intumescent material.

9. Bush according to claim 1, in which the elements (25, 27; 41; 61; 75, 76; 85, 86) made from intumescent material are arranged along the circumference of the opening for the conduit (2; 82) in associated recesses in an annular body, which is assembled from one or more parts (3, 4; 21, 22; 31, 32; 71; 72) and is made from a non-intumescent material, for example thermally insulating material or metal.

10. Bush according to one of the preceding claims, in which the bush, at one or more locations which are spaced apart from one another in the circumferential direction of the bush and are positioned around the opening for the conduit, is provided with a dent-forming element (5, 6; 25, 26; 35, 36; 54, 55; 75, 76; 85, 86) comprising intumescent material, which in the event of a fire presses a dent into the conduit (2; 82) at the said location, and is preferably provided, along the remaining part of the circumference of the opening for the conduit, with one or more differently designed elements (7; 27; 41; 61) made from intumescent material.

11. Bush according to claim 10, in which the bush is designed in such a manner that, as a result of swelling of the intumescent material of the one or more dent-forming elements (5, 6; 25, 26; 35, 36; 54, 55; 75; 85, 86) the conduit (2; 82) is subjected to load by the said dent-forming elements, for example at diametrically opposite locations, more quickly and/or with a greater radially inwardly directed force than the remaining circumference of the conduit (2; 82), in such a manner that at the said location or locations a dent is pressed into the conduit, making it subsequently easier for the intumescent material to press the conduit closed.

12. Bush according to claim 10 or 11, in which the bush around the circumference of the opening (33) for the conduit is provided with an annular element made from intumescent material or with a plurality of elements (41) made from intumescent material arranged in a ring, a dent-forming means (35; 36) being formed at one location or at a plurality of locations which are remote from one another around the circumference of the opening (33) for the conduit, by a pressure-concentrating member (39), which is arranged between the intumescent material (37) and the circumference of the opening (33) for the conduit and which has a relatively large surface area on which the intumescent material (37) can exert an inwardly directed compressive force and a relatively small surface area on the side which faces the opening (33) for the conduit.

13. Bush according to one or more of claims 10 - 12, in which the dent-forming means (5, 6; 25, 26; 35, 36; 54, 55; 75, 76; 86) arranged at one location or at a plurality of locations which are spaced apart in the circumferential direction of the bush around the opening (23, 33, 53, 73) for the conduit (2, 82) are formed by an element made from relatively quick-acting intumescent material which presses a dent into the conduit (2, 82).

14. Bush according to one or more of claims 10 - 13, in which the dent-forming means (25, 26; 35, 36; 54, 55) which are arranged at one location or at a plurality of locations which are spaced apart from one another in the circumferential direction of the bush around the opening for receiving the conduit are formed by an element made from relatively quick-acting intumescent material which presses a dent into the conduit, and is provided along the remaining part of the circumference of the opening for the conduit with one or more elements (27; 41; 61) made from relatively slow-acting intumescent material.

15. Bush according to one or more of the preceding claims, in which the dent-forming means arranged at one location or at a plurality of locations which are spaced apart from one another in the circumferential direction of the bush around the opening for the conduit are formed by a dent-forming element (5, 6; 25, 26) made from intumescent material which presses a dent into the conduit and is provided along the remaining part of the circumference of the opening for the conduit with one or more other elements (7; 27) made from intumescent material, the intumescent material of each dent-forming element (5, 6; 25, 26) having a greater thickness than that of the other elements (7; 27).

16. Bush (20) according to one or more of the preceding claims, in which the dent-forming means (25, 26) arranged at one location or at a plurality of locations which are spaced apart from one another in the circumferential direction of the bush around the opening (23) for the conduit are formed by a dent-forming element (25; 26) made from intumescent material which, in the event of a fire, presses a dent into the conduit and along the remaining part of the circumference of the opening for the conduit is provided with one or more other elements (27) made from intumescent material, each other element (27), lying further towards the outside, as seen in the radial direction, than the one or more dent-forming elements (25, 26).

17. Bush according to one or more of the preceding claims, in which the bush is provided, at diametrically opposite locations along the opening for the conduit, with dent-forming elements (5, 6; 25, 26; 35, 36; 54, 55) made from a relatively quick-acting intumescent material and, along the remaining part of the circumference of the opening for the conduit, is provided with elements (7; 27; 41; 61) made from relatively slow-acting intumescent material.

18. Bush according to one or more of claims 10 - 17, in which the dent-forming means which are present at one location or at a plurality of locations which are spaced apart from one another in the circumferential direction of the bush around the opening for the conduit each comprise an element which is made from unidirectionally expanding intumescent material, the main direction of expansion being oriented radially towards the opening for the conduit, so that a dent is pressed into the conduit, and along the remaining part of the circumference preferably one or more elements made from multi-directionally expanding intumescent material are provided.

19. Bush according to one or more of the preceding claims 10-17, in which the dent-forming means which are present at one location or at a plurality of locations which are spaced apart from one another in the circumferential direction of the bush around the opening for the conduit each comprise a laminated element which has layers of an intumescent material and layers of a metal and presses a dent into the conduit.

20. Fireproof passage for a conduit through a wall or floor opening, comprising a bush according to one or more of the preceding claims.

21. Fireproof passage according to claim 20, wherein the fireproof passage is adapted for a plastic conduit, for example with an integrated metal layer.

## Patentansprüche

1. Intumeszierendes Material enthaltende Rohrbüchse (1; 100; 20; 30; 50; 70; 80) für eine Rohrleitung (2; 82), welche Rohrbüchse (1) im Falle eines Feuers die Wirkung hat, den Durchlass für die Rohrleitung (2; 82) durch eine Wand oder einen Boden abzusperren, und welche Rohrbüchse einen Ringkörper (102) aus isolierendem Material mit einer Öffnung (23; 33; 53; 73) für die Rohrleitung (2; 82) und eine intumeszierendes Material enthaltende erste Zone aufweist, die sich über den Außenumfang des Ringkörpers (102) aus isolierendem Material erstreckt, **dadurch gekennzeichnet, dass** eine intumeszierendes Material enthaltende zweite Zone vorhanden ist, die an die Öffnung (23; 33; 53; 73) im Ringkörper (102) für die Rohrleitung (2; 82) angrenzt.

2. Rohrbüchse nach Anspruch 1, bei der ein oder mehrere Elemente (5, 7; 25, 27; 41; 61; 75, 76; 85, 86) aus intumeszierendem Material über den Innenumfang des Ringkörpers aus isolierendem Material angeordnet sind, falls zweckmäßig mit einem gegenseitigen Abstand in Umfangsrichtung gesehen.

3. Rohrbüchse nach einem der vorhergehenden Ansprüche, bei der ein oder mehrere Elemente (5, 7; 25, 27; 41; 61; 75, 76; 85, 86) aus intumeszierendem Material in Nuten im Ringkörper aus isolierendem Material aufgenommen sind, die an die Öffnung für die Rohrleitung (2; 102) angrenzen und zum Beispiel in Längsrichtung, in Umfangsrichtung oder schraubenlinienförmig verlaufen.

4. Rohrbüchse nach einem der vorhergehenden Ansprüche, bei der die Elemente (5, 7; 25, 27; 41; 61; 75, 76; 85, 86) aus intumeszierendem Material in der zweiten Zone an dem Ringkörper aus isolierendem Material zum Beispiel durch Festklemmen in Nuten, die vorhanden sein können, durch Verklebung oder durch Vernietung befestigt sind.

5. Rohrbüchse nach Anspruch 3, bei der eine oder mehrere Nuten an zumindest einer Endseite der Rohrbüchse offen sind, sodass ein Element aus intumeszierendem Material in die zugehörige Nut eingeschoben werden kann, zum Beispiel nachdem der Ringkörper um die Leitung in Position gebracht ist.

6. Rohrbüchse nach einem der vorhergehenden Ansprüche, bei der das intumeszierende Material der ersten Zone unterschiedliche intumeszierende Eigenschaften gegenüber dem intumeszierenden Material der zweiten Zone aufweist.

7. Rohrbüchse nach einem der vorhergehenden Ansprüche, bei der ein fester Außenmantel (101, 9) um die Schicht aus intumeszierendem Material der ersten Zone angeordnet ist.

8. Rohrbüchse nach Anspruch 1, bei der ein Element aus nicht-intumeszierendem Material, vorzugsweise wärmeisolierendem Material, in der zweiten Zone zwischen benachbarten Elementen aus intumeszierendem Material angeordnet ist.

9. Rohrbüchse nach Anspruch 1, bei der die Elemente (25, 27; 41; 61; 75, 76; 85, 86) aus intumeszierendem Material entlang dem Umfang der Öffnung für die Leitung (2; 82) in zugehörigen Ausnehmungen in einem Ringkörper angeordnet sind, der aus einem oder mehreren Teilen (3, 4; 21, 22, 31, 32; 71, 72) zusammengesetzt und von einem nicht-intumeszierendem Material, zum Beispiel wärmeisolierendem Material oder Metall, gebildet ist.

10. Rohrbüchse nach einem der vorhergehenden Ansprüche, bei der die Rohrbüchse an einer oder mehreren Stellen, die in Umfangsrichtung der Rohrbüchse voneinander beabstandet und um die Öffnung für die Rohrleitung herum angeordnet sind, mit einem intumeszierendes Material enthaltenden kerbenbildenen Element (5, 6; 25, 26; 35, 36; 54, 55; 75, 76; 85, 86) versehen ist, das im Falle eines Feuers eine Kerbe in die Rohrleitung (2; 82) an der betreffenden Stelle eindrückt, und vorzugsweise auf dem übrigen Teil des Umfangs der Öffnung für die Rohrleitung mit einem oder mehreren unterschiedlich ausgebildeten Elementen (7; 27; 41; 61) aus intumeszierendem Material versehen ist.

11. Rohrbüchse nach Anspruch 10, bei der die Rohrbüchse in der Weise ausgebildet ist, dass die Rohrleitung (2; 82) als Ergebnis des Anschwellens des intumeszierenden Materials des einen oder der mehreren kerbenbildenen Elemente (5, 6; 25, 26; 35, 36; 54, 55; 75; 85, 86) einer Belastung durch die kerbenbildenen Elemente, zum Beispiel an diametral einander gegenüberliegenden Stellen, schneller und/oder mit einer größeren radial nach innen gerichteten Kraft als der verbleibende Umfang der Rohrleitung (2; 82) ausgesetzt ist, derart, dass an der betreffenden Stelle oder den betreffenden Stellen eine Kerbe in die Rohrleitung eingedrückt wird, die es dem intumeszierenden Material wesentlich leichter macht, die Rohrleitung zusammenzudrücken.

12. Rohrbüchse nach Anspruch 10 oder 11, bei der die Rohrbüchse um den Umfang der Öffnung (33) für die Rohrleitung mit einem ringförmigen Element aus intumeszierendem Material oder mit einer Mehrzahl von in einem Ring angeordneten Elementen (41) aus intumeszierendem Material versehen ist, wobei eine kerbenbildende Einrichtung (35, 36) an einer Stelle oder an mehreren Stellen, die über den Umfang der Öffnung (33) für die Rohrleitung voneinander beabstandet sind, durch ein druckkonzentrierendes Glied (39) gebildet ist, das zwischen dem intumeszierenden Material (37) und dem Umfang der Öffnung (33) für die Rohrleitung angeordnet ist und das einen verhältnismäßig großen Oberflächenbereich, auf den das intumeszierende Material (37) eine nach innen gerichtete Druckkraft ausüben kann, und einen verhältnismäßig kleinen Oberflächenbereich auf der Seite aufweist, die der Öffnung (33) für die Rohrleitung zugewandt ist.

13. Rohrbüchse nach einem oder mehreren der Ansprüche 10 bis 12 bei der die kerbenbildende Einrichtung (5, 6; 25, 26; 35, 36; 54, 55; 75, 76; 85, 86), die an einer Stelle oder an mehreren Stellen, die in Umfangsrichtung der Rohrbüchse um die Öffnung (23, 33, 53, 73) für die Rohrleitung (2, 82) voneinander beabstandet sind, von einem Element aus verhältnismäßig schnell wirkendem intumeszierendem Material gebildet ist, das eine Kerbe in die Rohrleitung (2, 82) eindrückt.

14. Rohrbüchse nach einem oder mehreren der Ansprüche 10 bis 13, bei der die kerbenbildende Einrichtung (25, 26; 35, 36; 54, 55), die an einer Stelle oder an mehreren Stellen angeordnet ist, die in Umfangsrichtung der Rohrbüchse um die Öffnung zur Aufnahme der Rohrleitung voneinander beabstandet sind, von einem Element aus verhältnismäßig schnell wirkendem intumeszierendem Material gebildet ist, das eine Kerbe in die Rohrleitung eindrückt, und entlang dem übrigen Teil des Umfangs der Öffnung für die Rohrleitung ein oder mehrere Elemente (27; 41; 61) aus verhältnismäßig langsam wirkendem intumeszierendem Material vorgesehen sind.

15. Rohrbüchse nach einem oder mehreren der vorhergehenden Ansprüche, bei der die kerbenbildende Einrichtung, die an einer Stelle oder an mehreren Stellen angeordnet ist, die in Umfangsrichtung der Rohrbüchse um die Öffnung der Rohrleitung voneinander beabstandet sind, von einem kerbenbildenden Element (5, 6; 25, 26) aus intumeszierendem Material gebildet ist, das eine Kerbe in die Rohrleitung eindrückt, und entlang dem übrigen Teil des Umfangs der Öffnung für die Rohrleitung ein oder mehrere weitere Elemente (7; 27) aus intumeszierendem Material angeordnet sind, wobei das intumeszierende Material jedes kerbenbildenen Elements (5, 6; 25, 26) eine größere Dicke hat als diejenige der weiteren Elemente (7; 27).

16. Rohrbüchse (20) nach einem oder mehreren der vorhergehenden Ansprüche, bei der die kerbenbildende Einrichtung (25, 26), die an einer Stelle oder an mehreren Stellen angeordnet ist, die in Umfangsrichtung der Rohrbüchse um die Öffnung (23) für die Rohrleitung voneinander beabstandet sind, von einem kerbenbildenden Element (25, 26) aus intumeszierendem Material gebildet ist, das, im Falle eines Feuers, eine Kerbe in die Rohrleitung eindrückt, und entlang dem übrigen Teil des Umfangs der Öffnung für die Rohrleitung ein oder mehrere weitere Elemente (27) aus intumeszierendem Material angeordnet sind, wobei jedes weiters Element (27), in radialer Richtung gesehen, weiter zur Außenseite hin liegt als das eine oder die mehreren kerbenbildenen Elemente (25, 26).

17. Rohrbüchse nach einem oder mehreren der vorhergehenden Ansprüche, bei der die Rohrbüchse an einander diametral gegenüberliegenden Stellen entlang der Öffnung für die Rohrleitung mit kerbenbildenden Elementen (5, 6; 25, 26; 35, 36; 54, 55) aus verhältnismäßig schnell wirkendem intumeszierendem Material und entlang dem übrigen Teil des Umfangs der Öffnung für die Rohrleitung mit Elementen (7; 27; 41; 61) aus verhältnismäßig langsam wirkendem intumeszierendem Material versehen ist.

18. Rohrbüchse nach einem oder mehreren der Ansprüche 10 bis 17, bei der die kerbenbildende Einrichtung, die an einer Stelle oder an mehreren Stellen vorhanden ist, die in Umfangsrichtung der Rohrbüchse um die Öffnung für die Rohrleitung voneinander beabstandet sind, jeweils ein Element umfassen, das von unidirektional expandierendem intumeszierendem Material gebildet ist, wobei die Hauptrichtung der Expansion radial zur Öffnung für die Rohrleitung ausgerichtet ist, sodass eine Kerbe in die Rohrleitung eingedrückt wird, und entlang dem übrigen Teil des Umfangs vorzugsweise ein oder mehrere Elemente aus multidirektional expandierendem intumeszierendem Material vorgesehen sind.

19. Rohrbüchse nach einem oder mehreren der vorhergehenden Ansprüche 10 bis 17, bei der die kerbenbildende Einrichtung, die an einer Stelle oder an mehreren Stellen vorhanden ist, die in Umfangsrichtung der Rohrbüchse um die Öffnung für die Rohrleitung voneinander beabstandet sind, jeweils ein Schichtelement umfassen, das Schichten aus intumeszierendem Material und Schichten aus Metall aufweist und eine Kerbe in die Rohrleitung eindrückt.

20. Feuersicherer Durchlass für eine Rohrleitung durch eine Wand- oder Bodenöffnung, der eine Rohrbüchse nach einem oder mehreren der vorhergehenden Ansprüche umfasst.

21. Feuersicherer Durchlass nach Anspruch 20, wobei der feuersichere Durchlass für eine Kunststoffrohrleitung, zum Beispiel mit einer integrierten Metallschicht, geeignet ist.

## Revendications

1. Douille (1;100;20;30;50;70;80) pour un conduit (2;82) comprenant un matériau intumescent, laquelle douille (1), en cas de feu, a pour effet de boucher le passage dans le conduit (2;82) disposé à travers un mur ou un plancher et laquelle douille a un corps annulaire (102) fait à partir d'un matériau isolant avec une ouverture (23;33;53;73) pour le conduit (2;82) et une première zone comprenant le matériau intumescent qui s'étend sur la circonférence extérieure du corps annulaire (102) fait à partir de matériau isolant, **caractérisé en ce qu'**il y a une seconde zone comprenant du matériau intumescent qui est juxtaposée à l'ouverture (23;33;53;73) pour le conduit (2;82) dans le corps annulaire (102).

2. Douille selon la revendication 1, dans laquelle un ou plusieurs éléments (5,7;25,27;41;61;75,76;85,86) faits à partir de matériau intumescent sont agencés sur la circonférence intérieure du corps annulaire fait à partir de matériau isolant, si nécessaire à distance l'un de l'autre tel que vu dans la direction circonférentielle.

3. Douille selon l'une des revendications précédentes, dans laquelle un ou plusieurs éléments (5,7;25,27;41;61;75,76;85,86) faits à partir de matériau intumescent sont logés dans des rainures dans le corps annulaire fait à partir de matériau isolant qui sont juxtaposées à l'ouverture pour le conduit (2;102) et s'étendent, par exemple, dans la direction longitudinale, dans la direction circonférentielle ou en hélice.

4. Douille selon l'une des revendications précédentes, dans laquelle les éléments (5,7;25,27;41;61;75,76;85,86) faits à partir de matériau intumescent dans la seconde zone sont fixés au corps annulaire fait à partir de matériau isolant, par exemple en étant serrés dans des rainures qui peuvent être présentes, par liaison adhésive ou par rivetage.

5. Douille selon la revendication 3, dans laquelle une ou plusieurs rainures sont ouvertes sur au moins un côté d'extrémité de la douille, de sorte qu'un élément fait à partir de matériau intumescent peut être poussé dans la rainure associée, par exemple après que le corps annulaire a été positionné autour du conduit.

6. Douille selon l'une des revendications précédentes, dans laquelle le matériau intumescent de la première zone a des propriétés d'intumescence différentes que le matériau intumescent de la seconde zone.

7. Douille selon l'une des revendications précédentes, dans laquelle une enveloppe extérieure stable (101,9) est agencée autour de la couche de matériau intumescent de la première zone.

8. Douille selon la revendication 1, dans laquelle un élément fait à partir de matériau non-intumescent, de préférence un matériau isolant thermiquement, est agencé dans la seconde zone entre des éléments adjacents faits à partir de matériau intumescent.

9. Douille selon la revendication 1, dans laquelle les éléments (25,27;41;61;75,76;85,86) faits à partir de matériau intumescent sont agencés le long de la circonférence de l'ouverture pour le conduit (2;82) dans des renfoncements associés dans un corps annulaire qui est assemblé à partir d'une ou plusieurs parties (3,4;21,22;31,32;71;72) et qui est fait à partir de matériau non-intumescent, par exemple un matériau isolant thermiquement ou un métal.

10. Douille selon l'une des revendications précédentes, dans laquelle la douille, au niveau d'un ou plusieurs emplacements qui sont espacés les uns des autres dans la direction circonférentielle de la douille et sont positionnés autour de l'ouverture pour le conduit, est équipée d'un élément pour former une bosse (5,6;25,26;35,36;54,55;75,76;85,86) comprenant du matériau intumescent, qui en cas de feu presse une bosse dans le conduit (2;82) au niveau dudit emplacement, et est de préférence équipée, le long de la partie restante de la circonférence de l'ouverture pour le conduit, d'un ou plusieurs éléments conçus différemment (7;27;41;61) fait de matériau intumescent.

11. Douille selon la revendication 10, dans laquelle la douille est conçue de telle manière à ce que, en conséquence du gonflement du matériau intumescent de l'un ou plusieurs des éléments pour former une bosse (5,6;25,26;35,36;54,55;75,76;85,86), le conduit (2;82) est soumis à une charge par lesdits éléments pour former une bosse, par exemple au niveau d'emplacements diamétralement opposés, plus rapidement et/ou avec une plus grande force dirigée radialement vers l'intérieur que la circonférence restante du conduit (2;82), de telle manière à ce qu'au niveau dudit ou desdits emplacements, une bosse est pressée dans le conduit, rendant par conséquent plus facile pour le matériau intumescent de presser sur le conduit pour le fermer.

12. Douille selon la revendication 10 ou 11, dans laquelle la douille autour de la circonférence de l'ouverture (33) pour le conduit est équipée d'un élément annulaire fait à partir de matériau intumescent ou d'une pluralité d'éléments (41) faits à partir de matériau intumescent agencés en cercle, un moyen pour former une bosse (35;36) étant formé au niveau d'un emplacement ou au niveau d'une pluralité d'emplacements qui sont éloignés les uns des autres autour de la circonférence de l'ouverture (33) pour le conduit, par un élément de concentration de pression (39) qui est agencé entre le matériau intumescent (37) et la circonférence de l'ouverture (33) pour le conduit et qui a une surface relativement grande sur laquelle le matériau intumescent (37) peut exercer une force de compression dirigée vers l'intérieur et une surface relativement petite sur le côté qui fait face à l'ouverture (33) pour le conduit.

13. Douille selon l'une ou plusieurs des revendications 10 à 12, dans laquelle les moyens pour former une bosse (5,6;25,26;35,36;54,55;75,76;85,86) agencés au niveau d'un emplacement ou au niveau d'une pluralité d'emplacements qui sont espacés dans la direction circonférentielle de la douille autour de l'ouverture (23,33,53,73) pour le conduit (2,82) sont formés par un élément fait à partir de matériau intumescent à action relativement rapide qui presse une bosse dans le conduit (2,82).

14. Douille selon l'une ou plusieurs des revendications 10 à 13, dans laquelle les moyens pour former une bosse (25,26;35,36;54,55) qui sont agencés au niveau d'un emplacement ou au niveau d'une pluralité d'emplacements qui sont espacés les uns des autres dans la direction circonférentielle de la douille autour de l'ouverture pour recevoir le conduit sont formés par un élément fait à partir de matériau intumescent à action relativement rapide qui presse une bosse dans le conduit, et qui est équipé le long de la partie restante de la circonférence de l'ouverture pour le conduit d'un ou plusieurs éléments (27;41;61) faits à partir de matériau intumescent à action relativement lente.

15. Douille selon l'une ou plusieurs des revendications précédentes, dans laquelle les moyens pour former une bosse agencés au niveau d'un emplacement ou au niveau d'une pluralité d'emplacements qui sont espacés les uns des autres dans la direction circonférentielle de la douille autour de l'ouverture pour le conduit sont formés par un élément pour former une bosse (5,6;25,26) fait à partir de matériau intumescent qui presse une bosse dans le conduit et qui est équipé le long de la partie restante de la circonférence de l'ouverture pour le conduit d'un ou plusieurs autres éléments (7;27) fait à partir de matériau intumescent, le matériau intumescent de chaque élément pour former une bosse (5,6;25,26) ayant une plus grande épaisseur que celle des autres éléments (7;27).

16. Douille (20) selon l'une ou plusieurs des revendications précédentes, dans laquelle les moyens pour former une bosse (25,26) agencés au niveau d'un emplacement ou au niveau d'une pluralité d'emplacements qui sont espacés les uns des autres dans la direction circonférentielle de la douille autour de l'ouverture (23) pour le conduit sont formés par un élément pour former une bosse (25,26) fait à partir de matériau intumescent qui, en cas de feu, presse une bosse dans le conduit et, le long de la partie restante de la circonférence de l'ouverture pour le conduit, qui est équipé d'un ou plusieurs autres éléments (27) fait à partir de matériau intumescent, chaque autre élément (27) reposant davantage en direction de l'extérieur, tel que vu dans la direction radiale, que le ou les éléments pour former une bosse (25,26).

17. Douille selon l'une ou plusieurs des revendications précédentes, dans laquelle la douille est équipée, à des emplacements diamétralement opposés le long de l'ouverture pour le conduit, d'éléments pour former une bosse (5,6;25,26;35,36;54,55) faits à partir de matériau intumescent à action relativement rapide et, le long de la partie restante de la circonférence de l'ouverture pour le conduit, est équipée d'éléments (7;27;41;61) faits à partir de matériau intumescent à action relativement lente.

18. Douille selon l'une ou plusieurs des revendications 10 à 17, dans laquelle les moyens pour former une bosse qui sont présents au niveau d'un emplacement ou au niveau d'une pluralité d'emplacements qui sont espacés les uns des autres dans la direction circonférentielle de la douille autour de l'ouverture pour le conduit comprennent chacun un élément qui est fait à partir de matériau intumescent à extension unidirectionnelle, la direction principale d'extension étant orientée radialement en direction de l'ouverture pour le conduit, de sorte qu'une bosse est pressée dans le conduit, et un ou plusieurs éléments sont fournis le long de la partie restante de la circonférence de préférence faits à partir de matériau intumescent à extension multi-directionnelle.

19. Douille selon l'une ou plusieurs des revendications précédentes 10 à 17, dans laquelle les moyens pour former une bosse qui sont présents au niveau d'un emplacement ou au niveau d'une pluralité d'emplacements qui sont espacés les uns des autres dans la direction circonférentielle de la douille autour de l'ouverture pour le conduit comprennent chacun un élément laminé qui a des couches d'un matériau intumescent et des couches d'un métal et presse une bosse dans le conduit.

20. Passage résistant au feu pour un conduit disposé à travers une ouverture de mur ou de plancher, comprenant une douille selon l'une ou plusieurs des revendications précédentes.

21. Passage résistant au feu selon la revendication 20, dans lequel le passage résistant au feu est adapté pour un conduit plastique, par exemple avec une couche métallique intégrée.
